# EUROPEAN PATENT APPLICATION

(11) **EP 4 502 101 A1**
(43) Date of publication of application: **05.02.2025**
(21) Application number: 24191254.2
(22) Date of filing: 26.07.2024
(51) Int. Cl.: C09K 5/06, F28D 20/00, F28D 20/02, F28F 21/04, F28F 21/08

(54) **LATENT HEAT STORAGE UNIT**

(30) Priority: 31.07.2023 JP 2023124144
(71) Applicant: SHINKO ELECTRIC INDUSTRIES CO., LTD., Nagano-shi, Nagano 381-2287 (JP)
(72) Inventor: HORIUCHI, Michio, NAGANO, 381-2287 (JP)
(74) Representative: Regimbeau

(57) **Abstract**

A latent heat storage unit includes a ceramic part made of a polycrystalline body and having a closed space formed therein and a metal part provided in the closed space and containing boron, wherein a melting point of the metal part is 1100 °C or higher.

## Description

### FIELD

The present disclosure relates to latent heat storage units.

### BACKGROUND

In the related art, a latent heat storage unit has been proposed that utilizes an Al-Si alloy or the like as a phase change material (PCM) with a protective layer enclosing the PCM.

In recent years, there has been an increasing demand for the storage of larger latent heat.

There may be a need to provide a latent heat storage unit having a larger latent heat storage capacity.

### [Prior art literature]

### [Patent literature]

[Patent Document 1] Japanese Laid-Open Patent Publication No. 2021-031507
[Patent Document 2] Japanese Laid-Open Patent Publication No. 2015-048393

### SUMMARY

According to an aspect of the embodiment, a latent heat storage unit includes a ceramic part made of a polycrystalline body and having a closed space formed therein and a metal part provided in the closed space and containing boron, wherein a melting point of the metal part is 1100 °C or higher.

### BRIEF DESCRIPTION OF DRAWINGS

FIGS. 1A and 1B are drawings illustrating a latent heat storage unit according to a first embodiment;
FIGS. 2A through 2C are drawings illustrating a latent heat storage unit according to a second embodiment; and
FIG. 3 is an axonometric view illustrating a latent heat storage unit according to a third embodiment.

### DESCRIPTION OF EMBODIMENTS

In the following, the embodiment will be described with reference to the accompanying drawings. In the specification and drawings, elements having substantially the same functional configuration may be referred to by the same reference numerals, and duplicate descriptions thereof may be omitted.

### <First Embodiment>

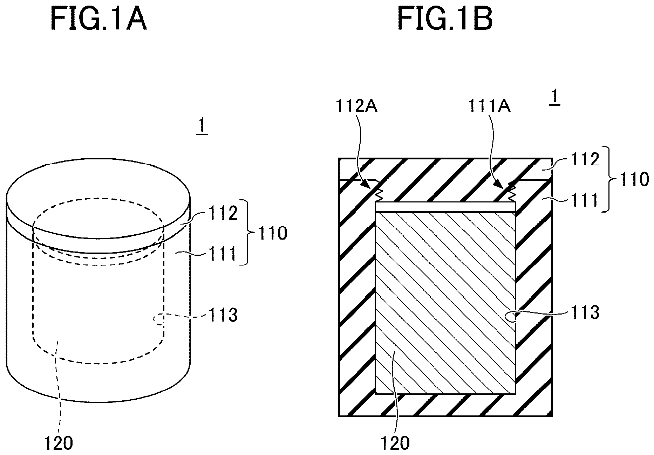

The following paragraphs will describe a first embodiment. The first embodiment is directed to a latent heat storage unit. FIGS. 1A and 1B are drawings illustrating the latent heat storage unit according to the first embodiment. FIG. 1A is a perspective view, and FIG. 1B is a cross-sectional view.

As illustrated in FIGS. 1A and 1B, a latent heat storage unit 1 according to the first embodiment includes a ceramic part 110 made of a polycrystalline body and a metal part 120.

A closed space 113 is formed in the ceramic part 110. The shape of the ceramic part 110 and the closed space 113 is cylindrical. The ceramic part 110 includes, for example, a container 111 and a lid 112. The container 111 has a cylindrical shape with one end (upper end) open and the other end (lower end) closed. A female thread 111A is formed on the inner wall surface at the upper end of the container 111. The lid 112 closes the opening of the container 111. A male thread 112A screwed to the female thread 111A is formed in the lid 112.

The ceramic part 110 may contain boron nitride (BN), boron carbide (B₄C), aluminum nitride (AlN), a composite of aluminum nitride and boron nitride, silicon nitride (Si₃N₄), silicon carbide (SiC), or any combination thereof. The ceramic part 110 may be made of boron nitride, boron carbide, aluminum nitride, a composite of aluminum nitride and boron nitride (composite ceramic), silicon nitride, silicon carbide, or any combination thereof.

The ceramic part 110 may contain borides. The ceramic part 110 may be made of borides. The borides may be, for example, titanium boride (TiB₂), zirconium boride (ZrB₂), hafnium boride (HfB₂), vanadium boride (VB₂), niobium boride (NbB₂), tantalum boride (TaB₂), lanthanum boride (LaB₆), or any combination thereof.

The metal part 120 is provided in the closed space 113. In other words, the metal part 120 is encapsulated in the ceramic part 110. It can also be said that the metal part 120 is airtightly covered by the ceramic part 110. A plurality of metal parts 120 may alternatively be provided in the ceramic part 110. The metal part 120 contains boron (B). For example, the main component of the metal part 120 is boron. The metal part 120 contains 50% or more boron by mass. The metal part 120 may be made of boron having a purity of 50 mass% or more. More preferably, the metal part 120 contains 80% or more boron by mass, and is made of boron having a purity of 80 mass% or more. Yet more preferably, the metal part 120 contains 99% or more boron by mass, or is made of boron having a purity of 99 mass% or more. The metal part 120 may contain silicon (Si), aluminum (Al), iron (Fe), copper (Cu), cobalt (Co), or any combination thereof in a total ratio of less than 20 mass%.

When the metal part 120 is composed of 80% boron by mass and 20% silicon by mass, for example, the phase change temperature of the metal part 120 is 1900 °C or less. When the metal part 120 is composed of 80% boron by mass and 20% iron by mass, the phase change temperature of the metal part 120 is 1900 °C or less. When the metal part 120 is composed of 80% boron by mass and 20% copper by mass, the phase change temperature of the metal part 120 is 1100 °C or less. When the metal part 120 is composed of 80% boron by mass and 20% cobalt by mass, the phase change temperature of the metal part 120 is 1800 °C or less.

Although boron has several allotropes (α-rhombohedral, β-rhombohedral, β-tetragonal, etc.), the boron used in the metal part 120 is, for example, β-rhombohedral boron, which is the most stable boron in the standard state.

The volume of the closed space 113 is preferably larger than that of the metal part 120. This is because the metal part 120 changes from solid to liquid during the use of the latent heat storage unit 1, and the metal part 120 expands during this phase change, as will be described later.

The melting point of β-rhombohedral boron is 2180 °C. When the main component of metal part 120 is β-rhombohedral boron, a phase change occurs between the solid and the liquid at about 2180 °C. At around this temperature, the ceramic part 110 made of a polycrystalline body is chemically stable. Because of this, regardless of whether the metal part 120 is solid or liquid, the ceramic part 110 is capable of confining the metal part 120 in the closed space 113. Moreover, even when used at high temperature, chemical changes such as oxidation are not likely to occur in the ceramic part 110. The melting point of the metal part 120 is, for example, 1100 °C or higher. The melting point of the metal part 120 is preferably 1400 °C or higher, more preferably 1700 °C or higher, and yet more preferably 2000 °C or higher. When the metal part 120 contains silicon or the like in addition to boron, it may suffice for the melting point of the metal part 120 to be lower than 2180 °C. The melting point of the metal part 120 may be measured by differential thermal analysis (DTA) or differential scanning calorimetry (DSC), for example.

In the latent heat storage unit 1, since the metal part 120 functions as a phase change material (PCM) and the metal part 120 contains boron, the phase change temperature of the metal part 120 between solid and liquid is high, which allows a larger latent heat to be stored. The latent heat stored in the latent heat storage unit 1 may be used for direct power generation by thermophotovoltaic (TPV), for example. The latent heat storage unit 1 may be used as a thermal light source in a range of about 2100 °C to 2400 °C for power generation by thermophotovoltaic, for example.

The heat of fusion per unit mass of boron is at least 10 times that of aluminum, which greatly improves the thermal energy density.

The material of the ceramic part 110 will now be described in detail.

From the viewpoint of reactivity with boron contained in the metal part 120 at a high temperature, boron nitride, boron carbide, aluminum nitride, and a composite of aluminum nitride and boron nitride are more preferable as the material of the ceramic part 110.

As boron nitride, hexagonal phase boron nitride is preferable. Boron nitride has excellent processability.

A composite of boron nitride and aluminum nitride (composite ceramic) has stability and high thermal conductivity as a sintered body. A composite of boron nitride and aluminum nitride has higher hardness and mechanical strength than hexagonal phase boron nitride. A sintered body of a composite of boron nitride and aluminum nitride has excellent processability. The ratio of boron nitride and aluminum nitride in the composite of boron nitride and aluminum nitride is not limited. The hardness and mechanical strength of the composite material change according to this ratio. The microstructure of the composite material is a mixture of aluminum nitride polyhedron (tetracaidecahedron) grains and plate-shaped boron nitride grains. The higher the proportion of plate-shaped boron nitride grains, the better the workability.

An example of a material of the ceramic part 110 is boride. As the boride, titanium boride, zirconium boride, hafnium boride, vanadium boride, niobium boride, and tantalum boride are preferable. These materials, which have conductivity with a specific resistance of about 10⁻⁷ Ω · m to 10⁻⁸ Ω · m and generate heat when energized, are usable as heaters. When the ceramic part 110 includes titanium boride, zirconium boride, hafnium boride, vanadium boride, niobium boride, or tantalum boride, the ceramic part 110 possesses the functions to protect and heat the metal part 120, and readily enables the realization of a higher heat storage density. In addition, the ceramic part 110 including titanium boride, zirconium boride, hafnium boride, vanadium boride, niobium boride, or tantalum boride serves to achieve the size reduction of a system when using an electric thermal energy storage (ETES) system which stores heat by directly utilizing surplus electric power.

The ceramic part 110 may have a seamless structure. The ceramic part 110 may not have a joint section extending to the closed space 113, for example. Moreover, the female thread 111A of the container 111 and the male thread 112A of the lid 112 need not be formed, and the lid 112 may be configured to snugly fit into the container 111.

### <Second Embodiment>

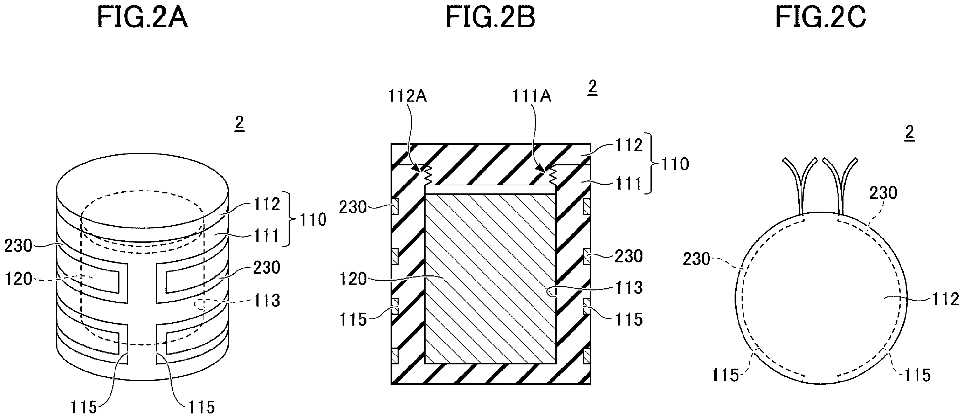

A second embodiment will be described below. The second embodiment is directed to a latent heat storage unit. FIGS. 2A through 2C are drawings illustrating a latent heat storage unit according to the second embodiment. FIG. 2A is an axonometric view, and FIG. 2B is a cross-sectional view. FIG. 2C is a top view.

In a latent heat storage unit 2 according to the second embodiment, as illustrated in FIG. 2, two grooves 115 are formed on the outer peripheral surface of the ceramic part 110. The two grooves 115 are arranged such as to form a substantially cylindrical shape. When viewed in a direction parallel to the long axis of the columnar metal part 120, each of the grooves 115 alternately follows a clockwise winding path and a counterclockwise winding path to wind on the lateral surface of a cylinder, for example. An electric heating element 230 is provided in each of the grooves 115. The latent heat storage unit 2 includes two electric heating elements 230. The two electric heating elements 230 are arranged such as to form a substantially cylindrical shape. The electric heating elements 230 contain, for example, graphite. The electric heating elements 230 may be made of graphite. The electric heating elements 230 are examples of heaters.

Other configurations of the second embodiment are the same as those of the first embodiment.

The second embodiment provides the same advantageous effects as those of the first embodiment. The electric heating elements 230 capable of heating the metal part 120 allows the electric energy applied from the outside to be converted into heat and stored in the latent heat storage unit 2. For example, utilizing the electric heating elements 230 to generate heat by excess electric power allows the excess electric power to be stored as heat. The energy stored in the latent heat storage unit 2 may be supplied to a factory, office, or commercial building as energy in the form of heat, steam (pressure), or electric power (turbine power generation by steam pressure, or the like).

The inclusion of the electric heating elements 230 in the latent heat storage unit 2 enables the reduction of energy loss. For example, when the electric heating elements and the latent heat storage unit are separated, transfer of generated heat from the electric heating elements to the latent heat storage unit requires the use of hot air currents or the like, which is likely to cause energy loss. This embodiment, however, allows for the reduction of such energy loss.

### <Third Embodiment>

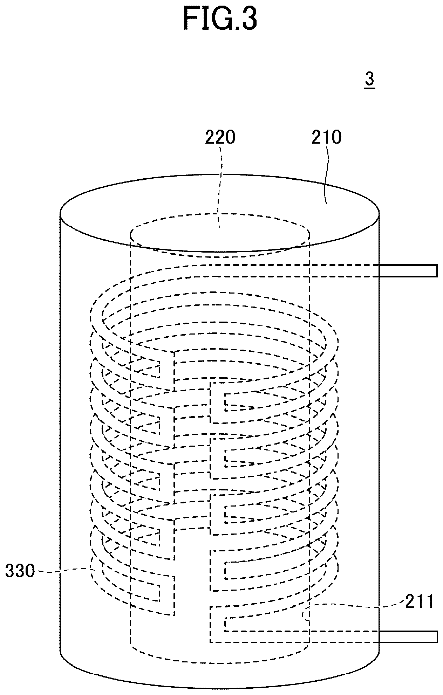

A third embodiment will be described below. The third embodiment is directed to a latent heat storage unit. FIG. 3 is an axonometric view illustrating a latent heat storage unit according to the third embodiment.

As illustrated in FIG. 3, a latent heat storage unit 3 according to the third embodiment includes a ceramic part 210 made of a polycrystalline body, a metal part 220, and an electric heating element 330 capable of heating the metal part 220. The electric heating element 330 is provided in the ceramic part 210. The electric heating element 330 is provided between the surface of the ceramic part 210 and the surface of the metal part 220. The electric heating element 330 follows a winding path to form a substantially cylindrical shape. Along a direction parallel to the long axis of the columnar metal part 220, the electric heating element 330 alternates clockwise winding and counterclockwise winding to follow a substantially cylindrical winding path, for example. The electric heating element 330 is an example of a heater.

When the main component of the ceramic part 210 is aluminum nitride, for example, the electric heating element 330 includes tungsten. The electric heating element 330 may include tungsten and aluminum nitride. In this case, in manufacturing the latent heat storage unit 3, tungsten powder is mixed with aluminum nitride powder, and organic components such as a solvent and a binder are added to prepare a resistor paste for example. The portions (circumferential portions) of the electric heating element 330, which portions are perpendicular to the long axis of the metal part 220, may be formed by, for example, printing the resistor paste on the surfaces of ceramic green sheets. The portions of the electric heating element 330 extending parallel to the long axis of the metal part 220 may be formed by, for example, filling, with the resistor paste, through holes formed through the ceramic green sheets. The resistivity of the electric heating element 330 may be adjusted according to the proportion of aluminum nitride. One or more of silicon oxide, magnesium oxide, calcium carbonate, or the like may be added to the resistor paste. These inorganic components allow for the formation of a liquid phase or a complex oxide phase during firing, thereby improving the adhesion strength of the electric heating element 330 to the ceramic part 210 and improving the stability of the resistivity.

When the main component of the ceramic part 210 is boron nitride, for example, the electric heating element 330 contains lanthanum boride. The electric heating element 330 may contain lanthanum boride and boron nitride. In this case, in manufacturing the latent heat storage unit 3, for example, lanthanum boride powder is mixed with boron nitride powder, and organic components such as a solvent and a binder are added to prepare a resistor paste. The portions (circumferential portions) of the electric heating element 330, which portions are perpendicular to the long axis of the metal part 220, may be formed by, for example, printing the resistor paste on the surfaces of ceramic green sheets. The portions of the electric heating element 330 extending parallel to the long axis of the metal part 220 may be formed by, for example, filling, with the resistor paste, through holes formed through the ceramic green sheets. The resistivity of the electric heating element 330 may be adjusted according to the proportion of boron nitride. One or more of silicon oxide, magnesium oxide, calcium carbonate, or the like may be added to the resistor paste. These inorganic components allow for the formation of a liquid phase or a complex oxide phase during calcination, thereby improving the adhesion strength of the electric heating element 330 to the ceramic part 210 and improving the stability of the resistivity.

The third embodiment provides the same advantageous effects as those of the second embodiment.

According to the present disclosure, at least one embodiment enables the storage of larger latent heat.

Although the preferred embodiments and the like have heretofore been described in detail, the present disclosure is not limited to the above-described embodiments and the like, and various variations and substitutions may be made to the above-described embodiments and the like without departing from the scope defined in the claims.

## Claims

1. A latent heat storage unit (1, 2, 3) comprising:
a ceramic part (110, 210) made of a polycrystalline body and having a closed space (111, 211) formed therein; and
a metal part (120, 220) provided in the closed space (111, 211) and containing boron,
wherein a melting point of the metal part (120, 220) is 1100 °C or higher.

2. The latent heat storage unit (1, 2, 3) as claimed in claim 1, wherein the metal part (120, 220) contains 99% or more boron by mass.

3. The latent heat storage unit (1, 2, 3) as claimed in claim 1 or 2, wherein a volume of the closed space (111, 211) is larger than a volume of the metal part (120, 220).

4. The latent heat storage unit (1, 2, 3) as claimed in claim 1 or 2, wherein the ceramic part (110, 210) contains one or more selected from a group consisting of boron nitride, boron carbide, aluminum nitride, a composite of aluminum nitride and boron nitride, silicon nitride, and silicon carbide.

5. The latent heat storage unit (1, 2, 3) as claimed in claim 1 or 2, wherein the ceramic part (110, 210) contains one or more borides.

6. The latent heat storage unit (1, 2, 3) as claimed in claim 5, wherein the one or more borides are one or more selected from a group consisting of titanium boride, zirconium boride, hafnium boride, vanadium boride, niobium boride, tantalum boride, and lanthanum boride.

7. The latent heat storage unit (1, 2, 3) as claimed in claim 1 or 2, wherein the ceramic part (110, 210) contains a material that generates heat when energized.

8. The latent heat storage unit (2, 3) as claimed in claim 1 or 2, further comprising a heater (230, 330) configured to heat the metal part (120, 220) .

9. The latent heat storage unit (2, 3) as claimed in claim 8, wherein the heater (230, 330) is provided in the ceramic part (110, 210).

10. The latent heat storage unit (2, 3) as claimed in claim 8, wherein the heater (230, 330) contains either tungsten or molybdenum or both.

11. The latent heat storage unit (2, 3) as claimed in claim 8, wherein the heater (230, 330) contains graphite.
